# FASCICULE DE BREVET EUROPEEN

(11) **EP 1 928 601 B1**
(45) Date de publication et mention de la délivrance du brevet: **16.05.2012**
(21) Numéro de dépôt: 06808190.0
(22) Date de dépôt: 22.09.2006
(51) Int. Cl.: B01L 3/00, A61D 19/02, A01N 1/02

(54) **ENSEMBLE DE CONDITIONNEMENT D'UN VOLUME PREDETERMINE DE SUBSTANCE BIOLOGIQUE DESTINEE A ETRE PLONGEE DANS UN AGENT CRYOGENIQUE LIQUIDE**
ANORDNUNG FÜR DIE VERPACKUNG EINES VORBESTIMMTEN VOLUMENS EINES BIOLOGISCHEN STOFFES ZUR IMMERSION IN EINEN FLÜSSIGEN KRYOGENEN WIRKSTOFF
ASSEMBLY FOR PACKAGING A PREDETERMINED VOLUME OF A BIOLOGICAL SUBSTANCE DESIGNED TO BE IMMERSED IN A LIQUID CRYOGENIC AGENT

(30) Priorité: 28.09.2005 FR 0509895
(43) Date de publication de la demande: 11.06.2008
(73) Titulaire: Cryo Bio System, 61300 Saint-Ouen-sur-Iton (FR)
(72) Inventeur: CLAIRAZ, Philippe, F-92330 Sceaux (FR); VAN KAPPEL, Anne-Linda, F-69008 Lyon (FR); LESIEUR, Francis, F-61300 l'Aigle (FR)
(74) Mandataire: Lepelletier-Beaufond, François
(86) Numéro de dépôt international: PCT/FR2006/002172
(87) Numéro de publication internationale: WO 2007/036628

(56) Documents cités:
- EP-A- 0 480 109
- EP-A- 0 562 947
- EP-A- 0 635 305
- EP-A- 0 997 114
- DE-A1- 3 802 087
- DE-A1- 10 154 431
- US-A- 5 036 904

## Description

La présente invention concerne un ensemble de conditionnement d'une substance biologique liquide comportant une enveloppe destinée à être plongée dans un agent cryogénique liquide.

On connaît déjà par la demande internationale WO 99/11121 un tel ensemble qui comporte en outre de l'enveloppe un support comportant une zone de réception formée par un tube ultra-mince à l'intérieur duquel une goutte qui forme le volume prédéterminé de substance biologique est introduite par capillarité et aussitôt la partie du support ayant reçu le volume prédéterminé est plongée dans un bain cryogénique, le support étant ensuite encapsulé dans un tube plus large qui est fermé à ses deux extrémités et placé dans le bain cryogénique.

On connaît par ailleurs des enveloppes formées d'un tube mince dans lequel est stockée une substance liquide à conserver notamment pour la conservation d'échantillon par exemple par la méthode de « vitrification » qui consiste à refroidir quasiment instantanément la substance à conserver en plongeant l'enveloppe et la substance biologique qu'elle contient dans un agent cryogénique liquide (de l'azote liquide par exemple).

Une fois la substance biologique liquide introduite dans le tube mince, l'enveloppe est scellée aux deux extrémités par une soudure thermique afin de la rendre étanche pour ensuite être plongée dans l'azote liquide.

L'invention vise à fournir une enveloppe de conditionnement du même type mais plus commode et simple d'emploi.

Elle propose à cet effet un ensemble de conditionnement d'un volume prédéterminé de substance biologique, comportant :
- une enveloppe configurée pour être plongée dans un agent cryogénique liquide, comportant un tube mince ; et
- un support comportant une zone de réception dudit volume prédéterminé, ledit support étant apte à être introduit à l'intérieur dudit tube mince ;
caractérisé en ce que ladite enveloppe comporte en outre un lest associé audit tube mince ; et en ce que ledit tube mince, ledit lest et ledit support sont configurés pour que ladite enveloppe avec ledit tube mince scellé aux deux extrémités, avec ledit support disposé à l'intérieur dudit tube mince et avec ledit volume prédéterminé de substance reçu dans ledit support, plonge sans flotter en surface dans ledit agent cryogénique liquide, y compris lorsque ledit volume prédéterminé est une goutte.

L'intégration d'un lest à l'enveloppe permet de faire plonger efficacement l'enveloppe dans l'azote liquide et empêche l'air résiduel contenu dans cette enveloppe de la faire flotter, grâce à quoi le refroidissement de la substance biologique s'effectue de façon homogène et quasi-instantanée.

Selon des caractéristiques préférées, pour les mêmes raisons qu'exposées ci-dessus :
- ledit lest est disposé à l'intérieur dudit tube mince ; et éventuellement
- ledit lest est un jonc comportant un premier tronçon à section ronde et un deuxième tronçon à section ovale ; ou
- ledit lest est une bille ; et/ou
- ledit tube mince présente une portion soudée contre laquelle ledit lest est en butée ; et/ou
- il existe entre ledit lest et ledit tube mince des moyens de maintien pour maintenir ledit lest dans ledit tube mince à une position prédéterminée ; et éventuellement
- lesdits moyens de maintien comportent au moins une portion saillante dudit lest ; et/ou
- ledit lest est disposé autour dudit tube mince ; et éventuellement
- ledit lest est une bague ; et éventuellement
- ledit tube mince présente un diamètre externe prédéterminé et ledit lest présente un diamètre interne prédéterminé inférieur audit diamètre externe dudit tube mince grâce à quoi ledit lest est maintenu en place en déformant ledit tube mince ; et/ou
- ledit lest est disposé à une extrémité dudit tube mince ; et/ou
- ledit lest est en métal ; et/ou
- un moyen d'identification de ladite substance biologique est associé audit lest ; et éventuellement
- ledit moyen d'identification est visuel ; et/ou
- ledit moyen d'identification est électronique.

Les caractéristiques et avantages de l'invention ressortiront de la description d'un exemple préféré qui suit, donné à titre illustratif mais non limitatif, en référence aux dessins annexés, sur lesquels :
- la figure 1 est une vue en coupe longitudinale agrandie illustrant une enveloppe comportant un tube mince convenant pour coopérer avec un lest conformément à l'invention, un support et un poussoir d'un ensemble de conditionnement disposé dans un emballage unitaire ;
- la figure 2 est une vue similaire obtenue selon une coupe transversale ;
- la figure 3 est une vue en coupe illustrant le positionnement de l'enveloppe, du support et du poussoir de cet ensemble à la fin de l'opération d'introduction du support dans l'enveloppe ;
- la figure 4 est une vue similaire à la figure 3 mais dans laquelle le poussoir a été retiré ;
- la figure 5 est une vue similaire à la figure 4 mais dans laquelle l'enveloppe est soudée aux deux extrémités ;
- les figures 6 et 7 sont des vues en coupe illustrant respectivement un deuxième et un troisième mode de réalisation du support de l'ensemble de conditionnement ;
- les figures 8 et 9 sont respectivement une vue en coupe et une vue en élévation prise du coté que l'on voit à gauche sur la figure 8 d'un quatrième mode de réalisation du support de l'ensemble de conditionnement ;
- la figure 10 est une vue en coupe de l'enveloppe d'un ensemble conforme à l'invention, comportant le tube mince illustré sur les figures 1 à 5 et un lest disposé dans le tube mince ;
- la figure 11 est une vue en coupe similaire à la figure 10 mais illustrant le positionnement du support dans cette enveloppe à la fin de l'opération d'introduction du support dans l'enveloppe ;
- les figures 12 et 13 sont respectivement une vue en coupe et une vue en élévation prise du coté que l'on voit à gauche sur la figure 12 du lest que comporte cette enveloppe ;
- les figures 14 et 15 sont deux vues en coupe illustrant deux modes de réalisation de l'enveloppe pour lesquels le lest est conformé différemment ; et
- les figures 16 et 17 sont deux vues schématiques de lests auxquels ont été associés des moyens d'identification de la substance biologique, visuel pour l'un et électronique pour l'autre.

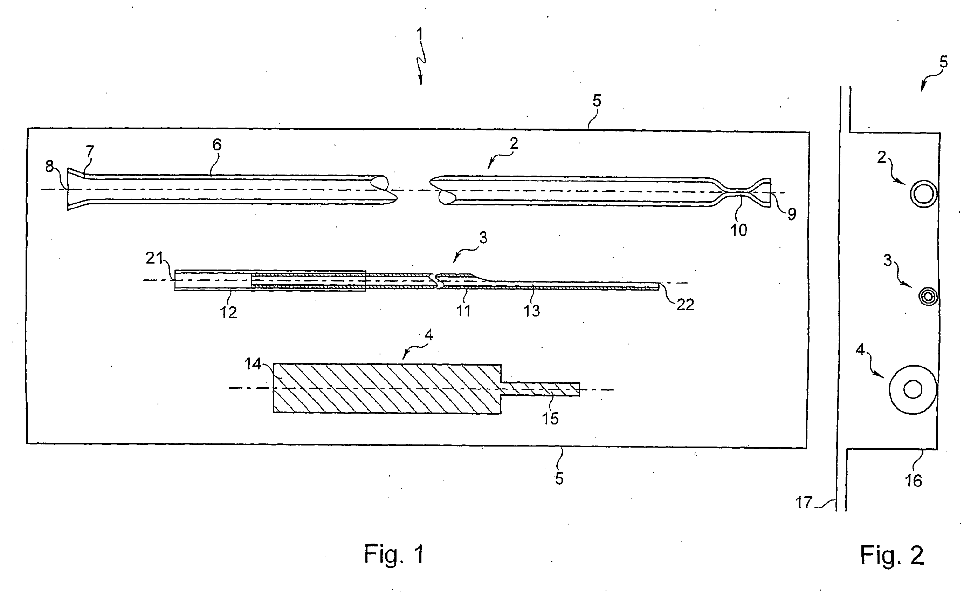

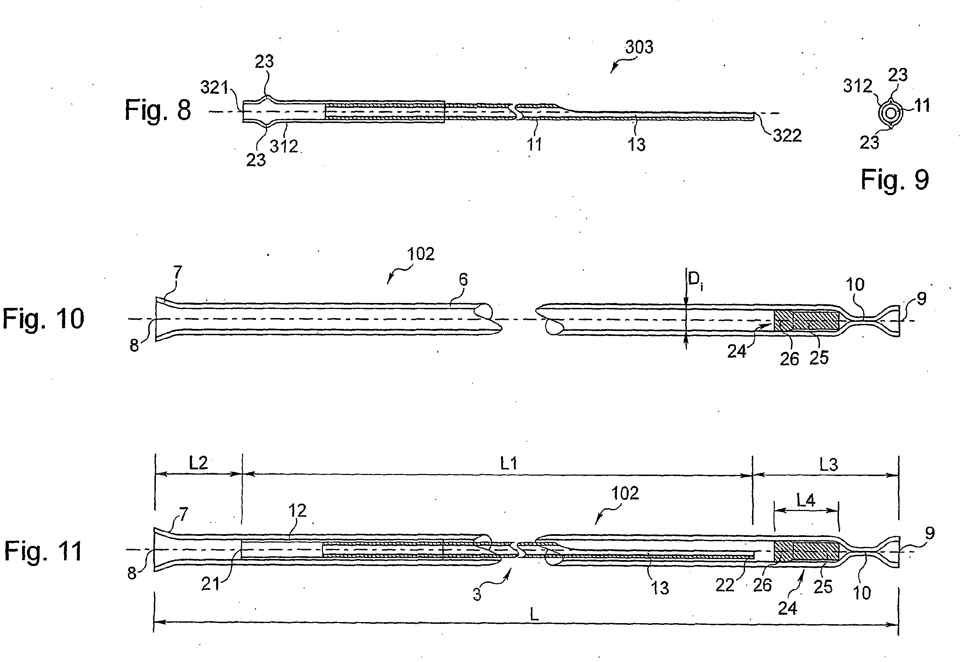

Dans le présent mémoire, il est décrit par simple commodité, à l'appui des figures 1 à 5, une enveloppe dépourvue de lest, mais il est entendu que l'enveloppe d'un ensemble conforme à l'invention comporte un lest, ainsi qu'illustré sur les figures 10 et suivantes.

L'ensemble de conditionnement 1 représenté en figure 1 est destiné à conditionner un volume prédéterminé de substance à vitrifier, pour cela il comporte une enveloppe 2, un support 3 et un poussoir 4.

L'ensemble 1 est contenu dans un emballage unitaire 5.

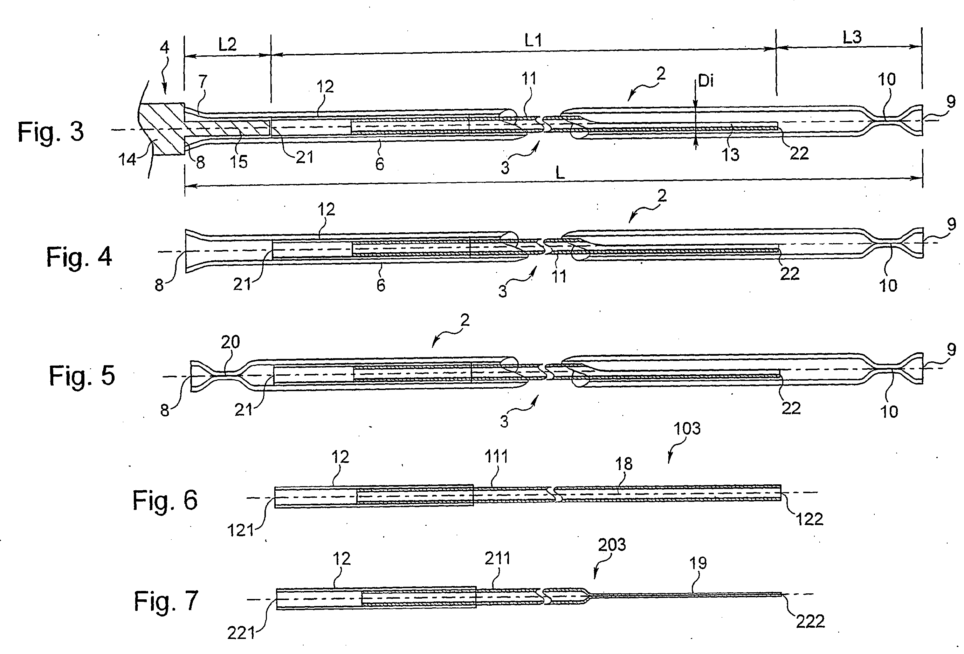

L'enveloppe 2 illustrée en figures 1 à 5 comporte un tube mince 6 de longueur L et de diamètre interne Dᵢ (figure 3). Le tube mince 6 présente une portion évasée 7 à une première extrémité 8 tandis qu'il présente une soudure 10 au voisinage de l'extrémité opposée 9.

On notera que l'on emploie ici le terme « soudure » pour désigner indifféremment la zone soudée à proprement parler ou celle-ci et la portion déformée qui l'environne.

L'enveloppe 2 est en matériau polymère choisi par exemple parmi les résines ionomères pour leur bonne tenue mécanique, leur comportement au froid et leur capacité à être soudées facilement tout en assurant une bonne étanchéité.

Les résines ionomères, formées par association d'un copolymère d'éthylène et d'un acide carboxylique avec un cation métallique possèdent la propriété de se comporter, au dessus d'une zone de température de transition, située dans la gamme 40°C-90°C, comme un matériau thermoplastique, tandis qu'en dessous de cette zone de transition elles se comportent comme un matériau réticulé, les cations métalliques formant des liaisons transversales entre des chaînes linéaires de copolymère. La transformation est réversible. La soudure du tube est simple et efficace, au-dessus des températures de transition ; le refroidissement après soudure n'induit que peu de tensions internes, le figeage de la résine par réticulation ionique ne s'accompagnant pas de variations importantes de volume.

Ces résines sont commercialisées sous le nom de marque Surlyn^{®}:

La structure réticulée des résines Surlyn^{®} à la température ambiante confère à l'enveloppe une bonne tenue mécanique ; l'enveloppe n'a pas tendance à fluer sous son propre poids et reste rectiligne.

Bien entendu les résines Surlyn^{®} possèdent des qualités de transparence et de neutralité biologique convenables.

Ici, la résine employée est du type commercialisé sous la dénomination Surlyn^{®} 8921 (également connu sous la référence commerciale Surlyn^{®} « PC100 »). Cette résine comporte un cation métallique sodium, et l'on n'a pu en déterminer une température de fragilisation. En relation avec la zone de transition, la température de fusion est de 84°C, et la température de solidification de 52°C.

La soudure est obtenue dans la gamme 90°C-110°C

Dans l'exemple illustré, la paroi du tube mince 6 présente une épaisseur comprise entre 0,125 et 0,300 mm et un diamètre intérieur compris entre 0,95 et 2,55 mm (1,60 mm dans l'exemple illustré) pour une longueur de 133 mm. L'évasement 7 s'étend sur 1,5 mm de longueur.

Le support 3 est constitué d'une portion tubulaire allongée 11 emboîtée coaxialement dans un embout tubulaire 12 de diamètre externe supérieur à celui de la portion tubulaire 11 de façon à obtenir un support étagé de longueur L1 (figure 3).

La portion tubulaire 11 est ici tronquée sur une étendue angulaire d'environ 180 degrés et sur environ 15 mm à partir de l'extrémité opposée à celle emboîtée dans l'embout 12 de façon à former une gouttière 13 qui comme exposé ci-après constitue la zone de réception du volume prédéterminé de substance.

L'embout tubulaire 12 est un tube de diamètre externe inférieur au diamètre interne Dᵢ de l'enveloppe.

L'embout 12 est coloré, une couleur pouvant correspondre par exemple à un type de substance biologique.

L'emballage unitaire 5 et l'embout tubulaire 12 portent accessoirement des inscriptions alphanumériques et/ou de type code à barres (non représentées sur les figures) permettant d'identifier l'ensemble de conditionnement 1.

Comme on le verra ci-après à l'aide de la figure 3, le support 3 présente une dimension transversale maximale inférieure au diamètre interne Dᵢ du tube mince et une longueur L1 inférieure à la longueur L de ce tube de façon à pouvoir être introduit à l'intérieur de l'enveloppe 2 tout en conservant un écart entre chaque extrémité 21 et 22 du support 3 et l'extrémité voisine correspondante 8, 9 du tube mince 6 pour souder le tube mince au voisinage des deux extrémités lorsque le support 3 est dans une position globalement centrée à l'intérieur du tube 6.

L'embout 12 et la portion tubulaire 11 sont réalisés ici en PETG.

On va maintenant décrire le poussoir 4 et l'emballage 5 à l'aide des figures 1 à 3.

Le poussoir 4 présente une première portion cylindrique 14 de diamètre externe supérieur au diamètre interne Dᵢ du tube 6 et une seconde portion cylindrique 15 de diamètre externe inférieur au diamètre interne Dᵢ de ce tube. La seconde portion cylindrique présente une longueur L2 (figure 3).

L'emballage 5 est une barquette pelable, ici en Tyvek^{®}, présentant une zone de réception 16 de chacun des éléments de l'ensemble de conditionnement disposés côte à côte (à savoir une enveloppe 2, un support 3 et un poussoir 4) fermée de façon étanche par un film pelable 17.

On va maintenant décrire l'opération de conditionnement du volume à conserver à l'aide des figures 1 à 5.

L'opérateur ouvre l'emballage 5 en pelant le film 17 pour accéder au support 3 en le saisissant par l'embout de manipulation 12. Un volume de substance liquide (non représenté sur les figures) est alors déposé par l'opérateur dans la gouttière 13 du support 3.

Le support 3 est ensuite introduit dans le tube mince 6 de l'enveloppe 2, la gouttière 13 en premier, par l'extrémité 8. La portion évasée 7 facilite le guidage du support 3 vers l'intérieur du tube.

Le poussoir est ensuite disposé devant l'extrémité 8 du tube 6 pour y introduire la portion 15. La forme étagée du poussoir 4 et ses dimensions permettent d'introduire la portion 15 sans que ne pénètre la portion 14, l'épaulement que comporte la portion 14 à sa jonction avec la portion 15 formant une butée qui vient contre le bord de l'évasement 7.

Dans cette position de butée illustrée en figure 3, le support 3 est poussé dans le tube mince 6 d'une longueur égale à la longueur L2 de la portion 15.

Dans cette position, le support 3 est globalement centré à l'intérieur du tube 6 avec un écart entre chacune de ses extrémités 21, 22 et l'extrémité voisine respective 8, 9 de ce tube.

Une fois le poussoir retiré, l'écart entre l'extrémité 21 du support 3 et l'extrémité voisine 8 du tube mince 6 est suffisant pour qu'une soudure 20 puisse être réalisée facilement dans la portion d'extrémité du tube de longueur égale à L2 (figure 5).

De même une soudure 10 a été déjà réalisée dans la portion d'extrémité opposée du tube mince 6 de longueur L3 égale à la différence de longueur entre la longueur L du tube 6 et la somme (L1+L2) de la longueur L2 de la portion 15 et de la longueur L1 du support 3.

L'écart entre l'extrémité 22 du support 3 et l'extrémité 9 du tube 6 est suffisant pour que le support 3, avec la soudure 10 déjà réalisée, puisse être introduit à l'intérieur du tube d'une longueur au moins égale à la somme (L1+L2) de la longueur L2 de la portion 15 et de la longueur L1 du support 3 sans que le support ne soit gêné par la soudure 10.

Dans cet exemple la longueur L2 est de 8 mm.

L'embout tubulaire 12 permet de disposer la gouttière 13 au centre coaxialement du tube 6 en vue d'éviter tout contact de la substance à vitrifier avec la surface interne de ce tube.

Le poussoir 4 est individuel à chaque ensemble de conditionnement et est à usage unique afin de minimiser les risques de contamination lors du conditionnement.

L'enveloppe 2 contenant le support 3 et soudée aux deux extrémités est ensuite plongée à la verticale pour faciliter le stockage, dans un liquide cryogénique (de l'azote liquide par exemple) pour vitrifier la substance en vue de sa cryopreservation.

Lorsque l'enveloppe 2 est plongée verticalement, la substance (liquide avant congélation) ne s'écoule pas en raison de la viscosité des cryo-protecteurs qui la composent et qui sont à l'origine de tensions de surfaces avec le support 3 suffisamment importantes pour empêcher la goutte de s'écouler.

Le support 3 peut être remplacé par les supports 103, 203 et 303 respectivement illustrés en figures 6, 7 et 8. D'une manière générale, on a conservé pour les éléments exactement identiques les mêmes références numériques que pour le support 3 tandis que l'on a employé pour les éléments similaires les mêmes références, mais additionnées pour chaque mode de réalisation d'un chiffre 100.

Le support 103 illustré en figure 6 présente une portion tubulaire 111 qui n'est pas ouverte en gouttière à son extrémité, la substance liquide est alors aspirée par capillarité ou en générant une dépression (par une source de vide par exemple) appliquée à l'extrémité 121 du support 103. La substance liquide pénètre alors par l'extrémité 122 pour occuper une partie du volume interne 18 de la portion tubulaire 111.

Le support 203 illustré en figure 7 présente une portion tubulaire 211 écrasée sur 15 mm pour former un méplat 19 qui constitue la zone de réception sur laquelle est déposé le volume de substance liquide.

Dans le support 303 représenté en figures 8 et 9, l'embout tubulaire 312 présente deux bossages 23 diamétralement opposés. Les bossages sont obtenus en écrasant localement la matière pour permettre ainsi d'augmenter la dimension transversale maximale du support 303 afin qu'elle soit légèrement supérieure au diamètre interne Dᵢ du tube mince 6. De cette façon, lors de l'introduction du support 303 dans le tube mince 6, les portions écrasées 23 viennent en appui contre la surface interne du tube mince 6 de l'enveloppe 2 en déformant localement le tube mince 6 pour agir comme un frein de positionnement et maintenir le support 303 en position en empêchant tout mouvement de glissement involontaire du support 303 sous son propre poids à l'intérieur de l'enveloppe 2.

Dans l'exemple illustré la formation des bossages par écrasement permet de faire passer la dimension transversale maximale du support de 1,4 à 1,7 mm.

Dans des variantes non illustrées, les bossages 23 sont remplacés par des bossages formés sur le tube mince 6 de l'enveloppe en faisant saillie vers l'intérieur afin de réduire localement le diamètre interne du tube 6 ou sont remplacés par une ou plusieurs saillies différentes d'un simple bossage.

Le support peut également être dimensionné afin qu'il s'ajuste glissant serré dans l'enveloppe.

Dans l'ensemble conforme à l'invention, l'enveloppe 2 est remplacée par les enveloppes 102, 202 et 302 respectivement illustrées en figures 10, 14 et 15. Ces enveloppes comprennent chacune un lest coopérant avec le tube mince.

L'enveloppe 102 illustrée en figure 10 comporte ainsi en plus du tube mince 6 un lest disposé à l'intérieur du tube mince 6.

Le lest est un jonc 24 présentant un premier tronçon 25 à section ronde et un second tronçon 26 écrasé de façon à former une section ovale. Une portion du tronçon 26 délimitée par la surface 27 fait saillie par rapport au tronçon 25. Ce jonc est réalisé dans un matériau de densité supérieure à celle de l'agent cryogénique liquide, du métal dans l'exemple illustré.

Le tronçon à section ovale 26 présente une dimension transversale maximale légèrement supérieure au diamètre interne Dᵢ du tube mince 6 afin que la portion saillante, lors de l'opération d'introduction du jonc 24 dans l'enveloppe 2, vienne en appui contre la surface interne du tube mince 6 en déformant localement le tube mince 6 pour agir comme un frein de positionnement et maintenir le jonc 24 en empêchant tout mouvement de glissement involontaire de ce jonc sous son propre poids à l'intérieur du tube mince 6.

On va maintenant décrire l'opération d'introduction du jonc 24 dans le tube mince 6 à l'aide des figures 10 et 11.

Le jonc 24 est introduit dans le tube mince 6 avant que la soudure 10 ne soit réalisée, en conservant un écart entre le lest 24 et l'extrémité 9 du tube 6.

Une fois le jonc introduit, la soudure 10 est réalisée dans la portion d'extrémité du tube mince 6 située entre l'extrémité 9 et le jonc 24.

Le jonc est ensuite poussé à l'aide d'une tige (non représentée sur les figures) introduite par l'extrémité 8 pour le faire venir en butée contre la soudure 10 du tube mince 6 comme illustré en figure 10.

Le jonc 24 est dimensionné de façon à pouvoir venir se loger en butée contre la soudure 10 dans l'espace situé entre l'extrémité 22 du support 3 (une fois celui-ci introduit dans l'enveloppe et placé en position à l'aide du poussoir 4) et la soudure 10 tout en conservant un écart avec l'extrémité 22.

Dans cet exemple, le lest présente une longueur L4 de 10 mm, l'écart entre l'extrémité 21 du support 3 et l'extrémité voisine 8 du tube 6 est de 8 mm tandis que l'écart entre l'extrémité opposée 22 du support 3 et le lest 24 est de 5 mm.

Ce lest tend à faire plonger verticalement dans l'azote liquide l'enveloppe scellée empêchant ainsi l'air piégé dans cette enveloppe de la faire flotter en surface de l'azote liquide.

L'enveloppe est ainsi entourée très rapidement et sur toute sa surface d'azote liquide, la substance biologique est alors vitrifiée de façon homogène et quasiment instantanément.

Le lest situé à l'extrémité du tube mince 6 ne perturbe pas le refroidissement de la substance à vitrifier.

Ce refroidissement quasi instantané et homogène de la substance biologique assure une vitrification de qualité qui minimise les risques de destruction des micro-organismes ou des cellules présents dans la substance biologique.

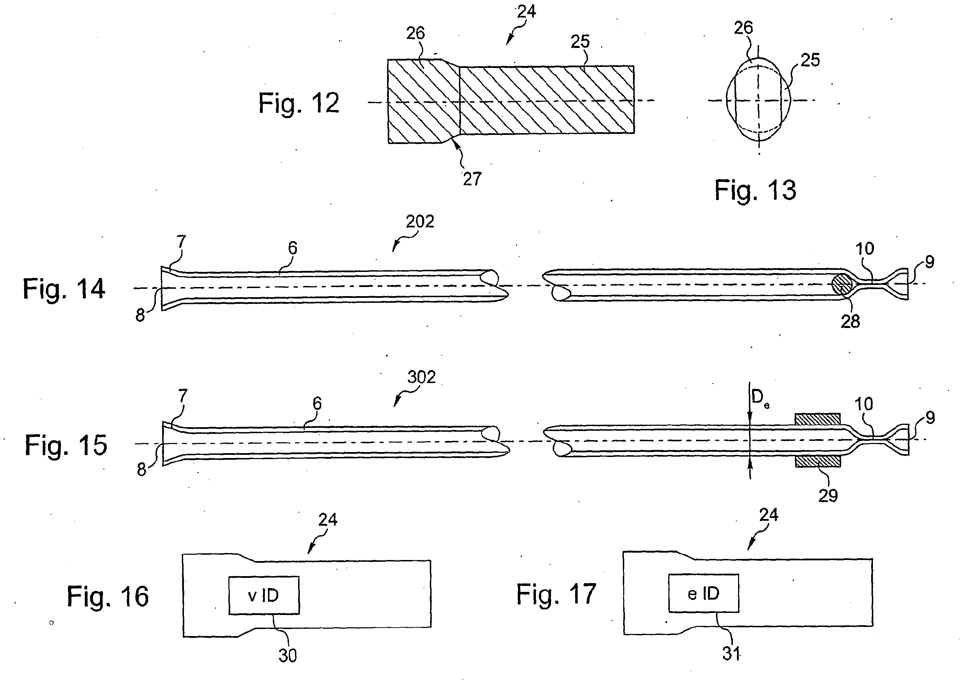

Dans l'enveloppe 202 illustrée en figure 14 le lest est une bille métallique 28 de diamètre légèrement supérieur au diamètre interne Dᵢ du tube mince 6. La bille 28 est disposée à l'intérieur du tube mince 6 contre la soudure 10 selon la même méthode que celle décrite pour l'introduction du jonc 24 dans le tube mince 6.

Dans le cas d'un lest disposé à l'intérieur du tube mince, deux soudures telles que 10 peuvent être réalisées de part et d'autre du lest pour empêcher tout contact avec la substance biologique (par exemple lorsque la substance biologique liquide est directement déversée dans le volume interne du tube 6).

Une alternative consiste à utiliser un lest annulaire tel que celui représenté en figure 15. Le lest de l'enveloppe 302 est une bague métallique 29 enfilée autour du tube mince 6. La bague 29 présente un diamètre interne légèrement inférieur au diamètre externe De du tube mince 6 afin que la bague 29 vienne en appui contre la surface externe du tube mince 6 en déformant localement le tube.

Dans les modes de réalisation représentés en figures 16 et 17, un moyen d'identification de la substance biologique que contient le tube mince est associé au lest 24. Le moyen d'identification 30 représenté en figure 16 est visuel et est constitué d'un code couleur, d'un code barre ou encore d'une suite de caractères.

Le moyen d'identification 31 représenté en figure 17 est électronique, par exemple une puce RFID ou une pastille électromagnétique collée contre le lest ou intégrée à celui-ci.

Dans des modes de réalisation non représentés, ce sont les lests 28 et 29 qui comportent un moyen d'identification tel que 30 ou 31 ; et/ou l'enveloppe comporte un manchon d'identification entourant le tube mince 6.

Il est possible de remplacer le lest 29 par un lest également disposé à l'extérieur du tube mince 6 mais entourant par exemple la soudure 10 une fois celle-ci réalisée.

Il est également possible de combiner n'importe laquelle des enveloppes avec n'importe lequel des supports décrits ci-dessus.

Quelque soit le mode de réalisation choisi, la soudure 10 peut n'être réalisée qu'une fois le support introduit dans l'enveloppe et placé en position à l'aide du poussoir 4.

## Revendications

1. Ensemble de conditionnement d'un volume prédéterminé de substance biologique, comportant :
- une enveloppe (102 ; 202 ; 302) configurée pour être plongée dans un agent cryogénique liquide, comportant un tube mince (6) ; et
- un support (3 ; 103 ; 203 ; 303) comportant une zone de réception (13 ; 18 ; 19) dudit volume prédéterminé, ledit support (3 ; 103 ; 203 ; 303) étant apte à être introduit à l'intérieur dudit tube mince (6) ;
**caractérisé en ce que** ladite enveloppe (102 ; 202 : 302) comporte en outre un lest (24 ; 28 ; 29) associé audit tube mince (6) ; et **en ce que** ledit tube mince (6), ledit lest (24 ; 28 ; 29) et ledit support (3 ; 103 ; 203 ; 303) sont configurés pour que ladite enveloppe (102 ; 202 ; 302) avec ledit tube mince (6) scellé aux deux extrémités, avec ledit support (3 ; 103 ; 203 ; 303) disposé à l'intérieur dudit tube mince (6) et avec ledit volume prédéterminé de substance reçu dans ledit support (3 ; 103 ; 203 ; 303), plonge sans flotter en surface dans l'azote liquide, y compris lorsque ledit volume prédéterminé est une goutte.

2. Ensemble selon la revendication 1, **caractérisé en ce que** ledit lest (24 ; 28) est disposé à l'intérieur dudit tubé mince (6).

3. Ensemble selon la revendication 2, **caractérisé en ce que** ledit lest est un jonc (24) comportant un premier tronçon à section ronde (25) et un deuxième tronçon à section ovale (26).

4. Ensemble selon la revendication 2, **caractérisé en ce que** ledit lest est une bille (28).

5. Ensemble selon l'une quelconque des revendications 2 à 4, **caractérisé en ce que** ledit tube mince (6) présente une portion soudée (10) contre laquelle ledit lest (24 ; 28) est en butée.

6. Ensemble selon l'une quelconque des revendications 2 à 5, **caractérisé en ce qu'**il existe entre ledit lest (24 ; 28) et ledit tube mince (6) des moyens de maintien pour maintenir ledit lest (24 ; 28) dans ledit tube mince (6) à une position prédéterminée.

7. Ensemble selon la revendication 6, **caractérisé en ce que** lesdits moyens de maintien comportent au moins une portion saillante (27) dudit lest (24).

8. Ensemble selon la revendication 1, **caractérisé en ce que** ledit lest est disposé autour dudit tube mince (6).

9. Ensemble selon la revendication 8, **caractérisé en ce que** ledit lest est une bague (29).

10. Ensemble selon l'une quelconque des revendications 8 et 9, **caractérisé en ce que** ledit tube mince (6) présente un diamètre externe prédéterminé (De) et ledit lest (29) présente un diamètre interne prédéterminé inférieur audit diamètre externe (Dₑ) dudit tube mince (6) grâce à quoi ledit lest (29) est maintenu en place en déformant ledit tube mince (6).

11. Ensemble selon l'une quelconque des revendications 1 à 10, **caractérisé en ce que** ledit lest (24 ; 28 ; 29) est disposé à une extrémité dudit tube mince (6).

12. Ensemble selon l'une quelconque des revendications 1 à 11, **caractérisé en ce que** ledit lest (24 ; 28 ; 29) est en métal.

13. Ensemble selon l'une quelconque des revendications 1 à 12, **caractérisé en ce qu'**un moyen d'identification (30 ; 31) de ladite substance biologique est associé audit lest (24 ; 28 ; 29).

14. Ensemble selon la revendication 13, **caractérisé en ce que** ledit moyen d'identification (30) est visuel.

15. Ensemble selon la revendication 13, **caractérisé en ce que** ledit moyen d'identification (31) est électronique,

## Claims

1. Assembly for packaging a predetermined volume of a biological substance, comprising:
- a sheathing (102; 202; 302) designed to be immersed in a liquid cryogenic agent, comprising a thin tube (6); and
- a support (3; 103; 203; 303) comprising a zone (13; 18; 19) for receiving said predetermined volume, said support (3; 103; 203; 303) being able to be introduced into said thin tube (6);
**characterised in that** said sheathing (102; 202; 302) also comprises a ballast weight (24; 28; 29) associated with said thin tube (6); and **in that** said thin tube (6), said ballast weight (24; 28; 29) and said support (3; 103; 203; 303) are designed such that said sheathing (102; 202; 302), with said thin tube (6) sealed at both ends, with said support (3; 103; 203; 303) disposed inside said thin tube (6) and with said predetermined volume of substance received in said support (3; 103; 203; 303), is immersed in liquid nitrogen without floating on the surface, even when said predetermined volume is a drop.

2. Assembly according to claim 1, **characterised in that** said ballast weight (24; 28) is disposed inside said thin tube (6).

3. Assembly according to claim 2, **characterised in that** said ballast weight is a slug (24) including a round cross section first portion (25) and an oval cross section second portion (26).

4. Assembly according to claim 2, **characterised in that** said ballast weight is a ball (28).

5. Assembly according to any one of claims 2 to 4, **characterised in that** said thin tube (6) has a welded portion (10) against which said ballast weight (24; 28) abuts.

6. Assembly according to any one of claims 2 to 5, **characterised in that** there exist between said ballast weight (24; 28) and said thin tube (6) holding means for holding said ballast weight (24; 28) in said thin tube (6) at a predetermined position.

7. Assembly according to claim 6, **characterised in that** said holding means include at least one projecting portion (27) of said ballast weight (24).

8. Assembly according to claim 1, **characterised in that** said ballast weight is disposed around said thin tube (6).

9. Assembly according to claim 8, **characterised in that** said ballast weight is a ring (29).

10. Assembly according to either of claims 8 and 9, **characterised in that** said thin tube (6) has a predetermined outside diameter (De) and said ballast weight (29) has a predetermined inside diameter less than said outside diameter (De) of said thin tube (6) thanks to which said ballast weight (29) is held in place by deforming said thin tube (6).

11. Assembly according to any one of claims 1 to 10, **characterised in that** said ballast weight (24; 28; 29) is disposed at one end of said thin tube (6).

12. Assembly according to any one of claims 1 to 11, **characterised in that** said ballast weight (24; 28; 29) is made of metal.

13. Assembly according to any one of claims 1 to 12, **characterised in that** means (30; 31) for identifying said biological substance are associated with said ballast weight (24; 28; 29).

14. Assembly according to claim 13, **characterised in that** said identification means (30) are visual.

15. Assembly according to claim 13, **characterised in that** said identification means (31) are electronic.

## Patentansprüche

1. Anordnung (Gesamtheit bzw. Einheit) für die Verpackung eines vorbestimmten Volumens einer biologischen Substanz, umfassend:
- ein Behältnis (Umhüllung) (102; 202; 302), welches zum Eintauchen in ein flüssiges kryogenes Mittel ausgebildet ist, umfassend ein dünnes Rohr (6); und
- einen Träger (3; 103; 203; 303), umfassend einen Aufnahmebereich (13; 18; 19) für das vorbestimmte Volumen, wobei der Träger (3; 103; 203; 303) zur Einführung in das Innere des dünnen Rohrs (6) ausgebildet ist;
**dadurch gekennzeichnet,**
**dass** das Behältnis (102; 202; 302) außerdem ein Gewicht (Ballast) (24; 28; 29) umfasst, welches mit dem dünnen Rohr (6) verbunden ist; und dass das dünne Rohr (6), das Gewicht (24; 28; 29) und der Träger (3; 103; 203; 303) derart ausgebildet sind, dass das Behältnis (102; 202; 302) mit dem an beiden Enden verschlossenen dünnen Rohr (6), mit dem im Inneren des dünnen Rohrs (6) angeordneten Träger (3; 103; 203; 303) und mit dem von dem Träger (3; 103; 203; 303) aufgenommenen vorbestimmten Volumen der Substanz, ohne an der Oberfläche zu schwimmen, in flüssigen Stickstoff eintaucht, auch wenn das vorbestimmte Volumen ein Tropfen ist.

2. Anordnung nach Anspruch 1, **dadurch gekennzeichnet, dass** das Gewicht (24; 28) im Inneren des dünnen Rohrs (6) angeordnet ist.

3. Anordnung nach Anspruch 2, **dadurch gekennzeichnet, dass** das Gewicht ein Stab (24) ist, umfassend einen ersten Abschnitt mit rundem Querschnitt (25) und einen zweiten Abschnitt mit ovalem Querschnitt (26).

4. Anordnung nach Anspruch 2, **dadurch gekennzeichnet, dass** das Gewicht eine Kugel (28) ist.

5. Anordnung nach einem der Ansprüche 2 bis 4, **dadurch gekennzeichnet, dass** das dünne Rohr (6) einen verschweißten Abschnitt (10) aufweist, gegen welchen das Gewicht (24; 28) anliegt.

6. Anordnung nach einem der Ansprüche 2 bis 5, **dadurch gekennzeichnet, dass** zwischen dem Gewicht (24; 28) und dem dünnen Rohr (6) Halteeinrichtungen (Stabilisatoren) vorliegen, um das Gewicht (24; 28) in dem dünnen Rohr (6) an einer vorbestimmten Position zu halten.

7. Anordnung nach Anspruch 6, **dadurch gekennzeichnet, dass** die Halteeinrichtungen mindestens einen vorstehenden Abschnitt (27) des Gewichts (24) umfassen.

8. Anordnung nach Anspruch 1, **dadurch gekennzeichnet, dass** das Gewicht um das dünne Rohr (6) herum angeordnet ist.

9. Anordnung nach Anspruch 8, **dadurch gekennzeichnet, dass** das Gewicht ein Ring (29) ist.

10. Anordnung nach einem der Ansprüche 8 und 9, **dadurch gekennzeichnet, dass** das dünne Rohr (6) einen vorbestimmten Außendurchmesser (Dₑ) aufweist und das Gewicht (29) einen vorbestimmten Innendurchmesser, der kleiner als der Außendurchmesser (Dₑ) des dünnen Rohrs (6) ist, aufweist, so dass das Gewicht (29) durch Verformung des dünnen Rohrs (6) in Position gehalten wird.

11. Anordnung nach einem der Ansprüche 1 bis 10, **dadurch gekennzeichnet, dass** das Gewicht (24; 28; 29) an einem Ende des dünnen Rohrs (6) angeordnet ist.

12. Anordnung nach einem der Ansprüche 1 bis 11, **dadurch gekennzeichnet, dass** das Gewicht (24; 28; 29) aus Metall ist.

13. Anordnung nach einem der Ansprüche 1 bis 12, **dadurch gekennzeichnet, dass** eine Identifizierungseinrichtung (30; 31) der biologischen Substanz mit dem Gewicht (24; 28; 29) verbunden ist.

14. Anordnung nach Anspruch 13, **dadurch gekennzeichnet, dass** die Identifizierungseinrichtung (30) visuell bzw. optisch wahrnehmbar ist.

15. Anordnung nach Anspruch 13, **dadurch gekennzeichnet, dass** die Identifizierungseinrichtung (31) elektronisch ist.
